# EUROPEAN PATENT SPECIFICATION

(11) **EP 3 534 754 B1**
(45) Date of publication and mention of the grant of the patent: **09.08.2023**
(21) Application number: 17921562.9
(22) Date of filing: 03.11.2017
(51) Int. Cl.: A47C 17/80, B60R 7/04, B60N 2/06, B62D 33/06, A47C 17/86

(54) **A FOLDABLE BED AND BED STORAGE FOR VEHICLES WITH CAB**
KLAPPBETT UND BETTSTAURAUM FÜR FAHRZEUGE MIT KABINE
LIT PLIANT ET RANGEMENT DE LIT POUR VÉHICULES DOTÉS D'UNE CABINE

(30) Priority: 04.11.2016 TR 201615800
(43) Date of publication of application: 11.09.2019
(73) Proprietor: Ford Otomotiv Sanayi Anonim Sirketi, Istanbul (TR)
(72) Inventor: CAKIR, Murat, Sancaktepe/Istanbul (TR); BASKIR, Sami, Istanbul (TR); SOZEN, Ersun, Sancaktepe/Istanbul (TR); SAVASIR, Belgutey, Sancaktepe/Istanbul (TR); COLAKEL, Didem, Sancaktepe/Istanbul (TR); DEREBAY, Begum, Sancaktepe/Istanbul (TR); OZDEMIR, Ezgi, Sancaktepe/Istanbul (TR)
(74) Representative: Dericioglu, E. Korhan
(86) International application number: PCT/TR2017/050545
(87) International publication number: WO 2019/035788

(56) References cited:
- EP-A1- 2 594 465
- EP-A2- 2 295 289
- WO-A1-2006/101427
- WO-A1-2010/146411
- DE-A1- 2 653 780
- DE-A1- 10 237 782
- FR-A5- 2 169 608
- FR-A5- 2 169 608
- GB-A- 2 500 439
- US-A1- 2005 104 415

## Description

### Technical Field

The present invention relates to a foldable bed and bed storage which enable the driver or passenger seat to move in a larger area within the cab in order that the driver will spend a more comfortable and quality resting time in heavy commercial vehicles with a cab, e.g. trucks, used in long distance transport, and which at the same time can be used as a storage area inside the cab.

### Prior Art

Heavy commercial vehicles are densely used in transportation. In particular, a significant part of land transport is performed by heavy commercial vehicles. Heavy commercial vehicles have such equipment as beds, seats, tables according to the needs in order to provide driver and passenger comfort during long distance transport and driving.

In heavy commercial vehicles used in long driving distances, large spaces are needed within the cab, i.e. the cabinet or cabin, in order for the driver to rest inside the vehicle. During long-distance journeys, the drivers spend a long time in the vehicle, and so it is required to provide an area inside the vehicle for the drivers to use as a resting area. The drivers meet most of their needs inside the vehicle during long-distance driving. In the existing vehicles, the only area that the drivers can use for resting or similar needs is the bed section. The bed section is typically located inside the driver's cab, behind the area in which the driver and passenger seats are positioned, at the rearmost section of the cab. The driver or passenger needs to stand up from their seat and go to the area in which the bed is positioned at the rear section of the cab in order to be able to use the bed section. The drivers do not generally prefer said bed area when they give short breaks for eating, watching TV, etc. Therefore, there exist a need for alternative solutions that will serve as an alternative to the bed section in the cab and allow the use of the seats in a more flexible way inside the vehicle.

The existing cab design applications in the state of the art aim to provide a large space for the drivers to rest and meet their needs during journey, and to that end, the areas used by the driver are utilized. In these applications, while the driver is provided with new spaces, s/he is prevented from using some of the areas. Again, some of the areas used by the driver are forsaken so as to create new spaces for the driver.

The U.S. Patent Application No. US2010123338 in the state of the art discloses an automotive seat which can be personalized for the driver's use. In this document, the automotive seat can be folded and made into a working and resting area. At the same time, the area under the seat can be used as a storage area. The mentioned U.S. Patent Application No. US2010123338 and the present invention comprise completely different technical features. In the present invention, an openable/closable area is formed at the rear section of the passenger seat using a sliding cover mechanism. In the present invention, a storage area with a slide mechanism in the movement direction and area of the passenger seat is used. Said area is not only used as a storage area but also provides a larger space for the movement capability of the passenger seat.

The U.S. Patent Application No. US2006226670 in the state of the art discloses a work office solution created inside a vehicle. In this document, the passenger seat is folded and a flat work surface is formed; the working equipment to be used by the driver are placed on the seat and the shelves are used. The mentioned U.S. Patent Application No. US2006226670 and the present invention completely differ in terms of use and the produced technical outcome. In the present invention, an openable/closable area is formed at the rear section of the passenger seat using a sliding cover mechanism. In the present invention, a storage area with a slide mechanism in the movement direction and area of the passenger seat is used. Said area is not only used as a storage area but also provides a larger space for the movement capability of the passenger seat.

The U.S. Patent Application No. US6692051 in the state of the art discloses a cab for a tractor-truck, wherein the seat mechanism is described. In this document, an area that will be used as a resting and working area is designed in the right section of the front console. In the present invention, an openable/closable area is formed at the rear section of the passenger seat using a sliding cover mechanism. In the present invention, a storage area with a slide mechanism in the movement direction and area of the passenger seat is used. Said area is not only used as a storage area but also provides a larger space for the movement capability of the passenger seat.

The U.S. Patent Application No. US2005/104415 in the state of the art discloses a bunk structure for a truck. The bunk structure comprises a bunk receiving tray which is coupled to support structure carried by a vehicle. The rear edge of tray may be fastened, such as by rivets, or other fasteners, to a hinge plate of a hinge. The other hinge plate of hinge is mounted to the rear wall, for example, of a vehicle to allow the tray to pivot upwardly about the longitudinal axis of hinge pins of the hinge. A forward support comprised of an elongated cross member is desirably provided to support the front edge of the bunk receiving tray. First and second upright supports are coupled at their respective upper end portions to cross support and at their respective lower end portions to, for example, the floor of the vehicle. There are different sized compartments from the bottom of the bunk structure. Said compartments are located inside the bed. Said compartments do not have their own independent closures. In the present invention, an openable/closable area is formed at the rear section of the passenger seat using a sliding cover mechanism. In the present invention, a storage area with a slide mechanism in the movement direction and area of the passenger seat is used. Said area is not only used as a storage area but also provides a larger space for the movement capability of the passenger seat.

In the state of the art, there exist no explanation regarding the technical features of the present invention and the technical outcomes produced by the present invention. Among the current applications, there exist no bed storage (area) which is disposed at the rear section of the driver or passenger seat, which is positioned in the movement axis and area of the seats, and which provides a space for the movement of the seats within the movement area of the seats and at the same time may be used as a storage area within the cab. The bed storage according to the invention may be provided in the foldable bed, or alternatively it may be separately mounted in the cab.

### Objects of the Invention

The object of the present invention is to provide a foldable bed and bed storage for vehicles with cab which permit creating an openable/closable storage area on the movement axis of the driver or passenger seat.

Another object of the present invention is to provide a foldable bed and bed storage for the vehicles with cab which provide, at the rear section of the seats, an extra space in which the seats can move by being unfolded in case a large space is needed inside the driver's cab.

Another object of the present invention is to provide, within the driver's cab, a foldable bed and bed storage for the vehicles with cab which can be practically unfolded/folded in a section of the driver bed.

Still another object of the present invention is to provide a foldable bed and bed storage for vehicles with cab which enables an area that is not desired to be used as a storage area by the driver to be entirely used as a movement area in a practical manner.

And another object of the present invention is to provide a foldable bed and bed storage for the vehicles with cab in which cleaning and putting goods have been facilitated by means of the cover which can be fully opened.

### Brief Description of the Invention

The foldable bed and bed storage for the vehicles with cab having been developed in order to achieve the objects of the present invention and defined in the first claim and other claims dependent thereon comprises, behind the automotive seat, a storage (area, storage area) inside the foldable bed disposed in the space in which the automotive seat can move, or independent of the bed. The storage is located within the in-cab driver bed, in the section remaining at the rear of the passenger seats. In an embodiment of the invention, the storage is not disposed in the bed, but directly in the cab or within a section of another element provided in the cab.

For opening/closing of the storage, a sliding cover mechanism is used. The sliding cover mechanism is arranged at the rear section of the cab. The sliding cover moves within channels. The channels of the sliding cover are mounted in the cab body or bed body. A storage area is provided along the movement channels by opening/closing the sliding cover. The slide mechanism which forms the cover of the storage and enables the same to be opened/closed is preferably a roller mechanism and stored in a housing. While the sliding cover is being opened, i.e. while the storage area is being formed, the sliding cover is withdrawn from inside the housing, the area in which the rails are disposed is closed, thereby forming the storage area. When the area in which the storage exists is desired to be used for the movement of the seats in the cab, in other words, when the driver or passenger needs an extra space for moving the seats, the sliding cover is retracted towards the housing by means of the roller, and thus the area in which the storage exists is used as an extra space inside the cab.

### Detailed Description of the Invention

The foldable bed and bed storage for the vehicles with cab which have been developed for achieving the objects of the present invention are illustrated in the accompanying drawings, in which:
- **Fig. 1.**: Perspective view showing the use of the storage, which is located in a section of the bed inside the cab, in open position.
- **Fig. 2.**: Perspective view of the foldable bed mounted in the cab.
- **Fig. 3.**: Perspective view of the bed storage, which is located in a section of the bed inside the cab, in close position, i.e. in the position when used as a storage area
- **Fig. 4.**: Perspective view of the bed storage.

The parts shown in the drawings are enumerated individually and the reference numerals corresponding thereto are given below.
- **1.**: Foldable bed
- **2.**: Lying table
- **3.**: Body
- **4.**: Storage area
- **5.**: Bed storage
- **6.**: Sliding cover
- **7.**: Grip
- **8.**: Housing
- **9.**: Rail
**91.** Upper part
**92.** Lower part

- **10.**: Roller
- **11.**: Lateral surface

- **K.**: Seat
- **H.**: Seat movement axis

The foldable bed (1) which is disposed in the cab of heavy commercial vehicles, which is used by the driver or passengers for resting, and which provides the user with a storage area or an empty space for the movement of the seats (K) in the linear seat movement axis (H) of the driver or passenger seat (K) comprises:
- at least one preferably flat and bed-like lying table (2) which is used by the driver or passenger for resting, sleeping and on which they can lie down,
- at least one body (3) which is disposed under the lying table (2), preferably supports the lying table (2), and is mounted in the cab floor,
- at least one storage area (4) which is disposed at the lower section of the lying table (2), preferably inside the body (3) and which presents areas that can be used by the driver for storing his/her belongings, and
- at least one bed storage (5) which is disposed in the linear seat movement axis (H) of the driver or passenger seat (K) within the body (3) or storage area (4); the width of which is as large as the width of at least one seat (K) or as large as the sitting portion of the seat (K); which provides the user with an empty space in reverse movement of the seat (K); and which comprises an openable/closable sliding cover (6), a roller (10) which enrolls the sliding cover (6) by retracting the same in its direction, and a housing (8) in which the sliding cover (6) is stored.

The foldable bed (1) according to the invention is provided in the driver's cab. The driver or passenger can rest for a short or long time within the cab using the foldable bed (1).

The bed storage (5) disposed in the foldable bed (1) presents a storage area (4) in the cab for the user in which s/he can store his goods, at the same time providing an extra space for the user so that s/he can move the seats (K) in the cab in reverse direction. When the driver or passenger needs more space within the vehicle cab for resting, s/he opens the sliding cover (6) of the bed storage (5), and thus obtains an empty space in the area in which the bed storage (5) exists. The user uses such empty space for moving the seat (K) in reverse direction and providing a larger area for himself/herself in the front section of the seat (K). The bed storage (5) provides sufficient extra space for the user that will enable the driver or passenger seat (K) to be moved until the rearmost section of the cab.

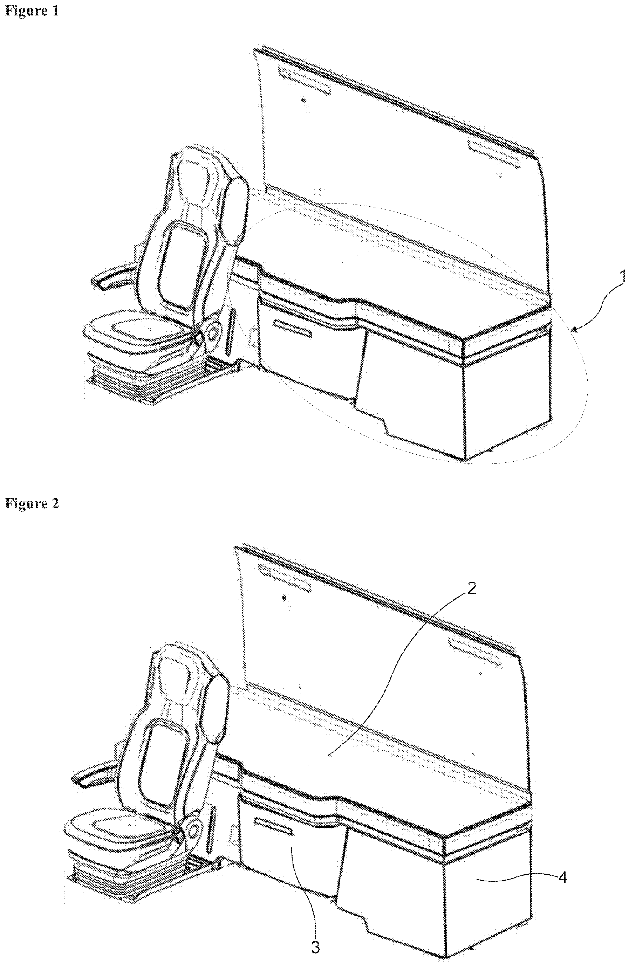

The foldable bed (1) preferably comprises at least one lying table (2), at least one body (3), at least one storage area (4), and at least one bed storage (5). The foldable bed (1) is preferably located in the rear section of the seats (K), at the rearmost of the driver's cab (Fig. 1). The foldable bed (1) is preferably mounted in the rear wall or floor of the cab. Provided in the uppermost section of the foldable bed (1) is the lying table (2) on which the driver or passenger lies down for resting, sleeping. The lying table (2) is a single-piece, or it consists of more than one parts. The lying table (2) is preferably located on the body (3) and presents a flat and steady sleeping area by sitting on the body (3) (Fig. 2). The lying table (2) is secured from the end point thereof to the body (3) or cab rear wall preferably by way of a hinge, bracket or a bearer-like connection piece. The lying table (2) can be folded by being moved towards the cab rear wall, preferably in parallel to the cab rear wall, from the connection point by means of the connection piece.

Thanks to the fact that the lying table (2) is movable, i.e. foldable, access to the upper portion of the body (3) is possible and the body (3) can be made into different compartments according to the intended use. In an embodiment of the invention, the body (3) is provided therein with a storage area (4), preferably in the left and/or right and/or middle portion of the body (3) (Fig. 1). The storage area (4) presents areas, in lower portion of the lying table (2) and preferably within the body (3), that can be used by the driver. The storage area (4) may have varying size, width and depth. The storage areas (4) having different types of covers with different sizes according to the intended use of the driver or commercial vehicle can be used.

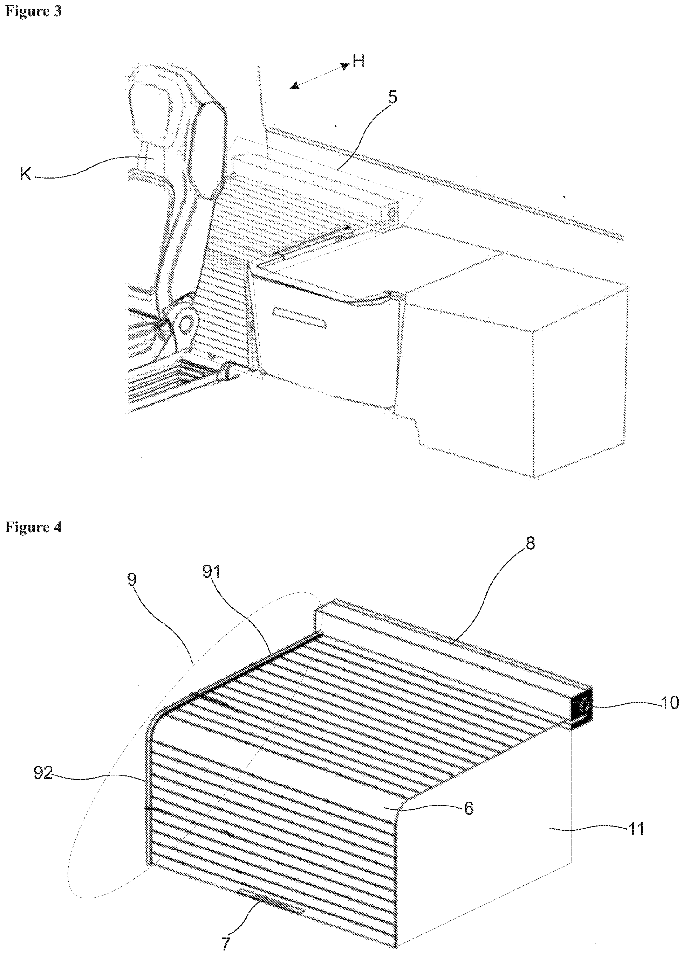

The bed storage (5) is provided in the storage area (4) or body (4) of the foldable bed (1) (Fig. 3). In an embodiment of the invention, at least one of the storage areas is used as bed storage (5). The bed storage (5) has a width, within the storage area (4), as large as at least one seat (K) such that it will fill the storage area (4). The bed storage (5) provides the user, in a section of the foldable bed (1), with a special compartment that can be used as an openable/closable storage area or empty space. The user can use said compartment provided by the bed storage (5) for moving the seats (K) towards the rear portion of the cab, or for storing his/her belongings if s/he desires. The bed storage (5) is preferably configured as below.

A bed storage (5) which is disposed in the cabs of heavy commercial vehicles, preferably within the movement area of the seats (K) in reverse direction in linear seat movement axis (H) of the sliding driver or passenger seat (K), and/or inside the foldable bed (1) comprises:
- a sliding cover (6) which closes the preferred area,
- at least one housing (8) which is preferably mounted in the cab chassis or on the foldable bed (1) such that it will be parallel to the driver or passenger seat (K) and in which the sliding cover (6) is stored,
- at least one rail (9) which is disposed between the housing (8) and cab floor or the bottom of the foldable bed (1); which defines the area in which the sliding cover (6) will move; and which enables, along the border in which it is located in a preferred area, the sliding cover (6) to be moved,
- a roller (10) which is preferably disposed in the housing (8); one end of which is connected to the sliding cover (6); and which applies a pulling force to the sliding cover (6) in the direction in which it is located, i.e. in the direction of the housing (8), and
- a sliding cover (6) which preferably moves inside the rail (9) and along the rail (9) and which, by closing some of or the whole rail (9), presents an area, in the section in which the rail (9) and the housing (8) are present, where various goods can be put.

The bed storage (5) according to the invention is located in the driver's cab of heavy commercial vehicles. In another embodiment of the invention, the bed storage (5) is located within the foldable bed (1) disposed in the cab; and in an alternative embodiment of the invention, it can be separately mounted in the cab.

In an embodiment of the invention, the bed storage (5) is positioned under the lying table (2), preferably such that it will support the lying table (2). The bed storage (5) is directly mounted in the floor of the driver's cab or at the rear wall thereof.

The closed area in which storage will be made in the bed storage (5) is preferably achieved by the sliding cover (6). The sliding cover (6) is preferably made of plastic, fabric, wood, metal or a material, and it is louvered. The sliding cover (6) may be made of a light, cost-effective, or aesthetically appealing material. In an embodiment of the invention, the sliding cover (6) is produced of the same material and with the same color as the vehicle seat (K) upholstery. In another embodiment of the invention, the sliding cover (6) is made of a resistant rigid plastic or wood, and has a louver-like structure. The louver structure and appearance of the sliding cover (6) provides visual integrity in staged use.

The sliding cover (6) is preferably provided thereon with a grip (7). Said grip (7) enables the user to easily grab the sliding cover (6) and move it in the direction that s/he desires again easily.

The sliding cover (6) is preferably stored inside a housing (8). When the sliding cover (6) is not used, the sliding cover (6), partly or fully, is collected inside the housing (8). The housing (8) allows the sliding cover (6) to be kept in a closed area when said sliding cover (6) is not used.

In an embodiment of the invention, the housing (8) is provided therein with a roller (10). One end of the sliding cover (6) is in connection with the roller (10) disposed in the housing (8). The roller (10) is in a tense situation and applies a pulling force on the sliding cover (6). The roller (10) applies a pulling force on the sliding cover (6) in the direction of the housing (8). Said pulling force enables the sliding cover (6) to move towards the inside of the housing (8). The roller (10) also allows the sliding cover (6) to be wound around itself. The roller (10) ensures that the sliding cover (6) is wound and remains inside the housing (8). When the sliding cover (6) is not in use, it remains inside the housing (8) wound around the roller (10). When the sliding cover (6) is desired to be used, i.e. when a closed area or a closed store is desired to be created, the sliding cover (6) is pulled out from the housing (8) and moved towards the outside of the housing (8) by rotating around the roller (10).

In an embodiment of the invention, the roller (10) comprises locks. The locks disposed in the roller (10) allows the roller (10) to be used in a staged manner. The sliding cover (6) can be fixed between such stages in a way to present different open positions. Thus, the user can fully close, or keep partly open the sliding cover (6) by way of the staged roller (10).

The area in which the sliding cover (6) is to move as well as the moving direction thereof is preferably defined by the rail (9). The rail (9) is provided between the housing (8) and the cab floor or the bottom of the foldable bed (1). When the sliding cover (6) is being used, at least one edge of the sliding cover (6) passes through the rail (9) and moves as such. Hence, the area in which the sliding cover (6) is to be present and move is defined by the rail (9) (Fig. 4). The rail (9) is preferably provided with a channel and it moves, during the movement of the sliding cover (6), inside such channel by being introduced thereinto.

In an embodiment of the invention, the rail (9) extends towards the cab floor starting from the housing (8). The rail (9) may be linear or circular.

In the preferred embodiment of the invention, the rail (9) is L-shaped. The rail (9) preferably comprises an upper part (91) and a lower part (92). The rail (9) comprises an upper part (91) which, in parallel to the driver's cab floor from the housing (8), preferably having the same width as or shorter than the lying table (2) and a lower part (92) which is preferably perpendicular to the upper part (91) and extends from the upper part (91) until the floor (Fig. 4). The sliding cover (6) is introduced into and moves inside the rail (9). When the sliding cover (6) is used, the sliding cover (6) passes through the upper part (91) and the lower part (92) and forms a closed area along the rail (9). When the sliding cover (6) is not used, the roller (10) winds the sliding cover (6) thereon and ensures that it is maintained within the housing (8) and presents an empty space along the rail (9).

The bed storage (5) is located in the driver's cab, preferably within the foldable bed (1) body (3) or storage area (4). The bed storage (5) forms a closed area in the area that it exists, said closed area being closed when preferred, or being optionally fully open when preferred. In an embodiment of the invention, the lateral surfaces of the bed storage (5) is formed by the body (3) or storage area (4) surfaces since the bed storage (5) is positioned in the body (3) or storage area (4).

In an alternative embodiment of the invention, the bed storage (5) comprises a lateral surface (11) (Fig. 4). With the lateral surfaces (11) which are arranged under the rail (9) and extend until the floor, the edges of the bed storage (5) facing the body (3) or storage area (4) are closed, thereby achieving a bed storage (5) with the sides thereof being closed.

The lateral surfaces (11) in the area in which the bed storage (5) exists are preferably enclosed by the body (3) or the storage area (4). The body (3) or storage area (4) of the foldable bed (1) forms the lateral surfaces of the bed storage (5) (Fig. 1-2). The area in which the bed storage (5) is to be used is provided with a rail (9) all along. A sliding cover (6) with roller (10) is provided in the housing (8). The grip (7) provided on the sliding cover (6) is pulled and the sliding cover (6) is moved in the rail (9). The sliding cover (6) is moved along and fixed at a point on the rail (9), presenting a closed area in the area where the bed storage (5) is present. This closed area formed by the bed storage (5) is used for storing various goods, i.e. belongings, of the user. The bed storage (5) is arranged exactly at the rear section of the driver or passenger seat (K), preferably aligned with the slides in which the seats (K) move. The seat (K) slides along the floor and from the lower portion of the bed storage (5). In case the driver or passenger needs additional space in the cab for resting, s/he first raises the lying table (2), and thus opens the upper surface of the bed storage (5). Afterwards, the user releases the sliding cover (6) from where it is, making the sliding cover (6) to be collected in the housing (8) by way of the roller (10). Thus, an empty space along the area in which the bed storage (5) exists is achieved (Fig. 1). The driver or passenger moves his/her seat (K) in reverse direction on the slide until said empty space and utilizes the area in which the bed storage (5) exists for the seat (K). When the driver or passenger needs an area in the cab for putting his/her belongings again inside the cab, s/he takes the seat (K) towards the front, closes the sliding cover (6), and makes the bed storage (5) into a structure to place his/her belongings. Moreover, easy access of the user to the entire bed storage (5) is achieved thanks to the fact that the sliding cover (6) can be fully opened.

In an embodiment of the invention, the sliding cover (6) can be controlled by a motor. In this case, the motor of the sliding cover (6) is operated by an on/off switch. The user opens/closes the sliding cover (6) by pushing the on/off switch.

In another embodiment of the invention, the bed storage (5) is directly mounted in the driver's cab. The bed storage (5) is mounted at the rear section of the cab, in the movement axis and immediately behind the seats, preferably on the floor or cab rear surface or cab lateral surface.

In an embodiment of the invention, the movement of the sliding cover (6) is ensured by movement components with sleeve, bearing, etc. The sliding cover (6) moves inside a configuration with sleeve and bearing.

## Claims

1. A foldable bed for a cab of heavy commercial vehicles (1) intended to be disposed in the cab of heavy commercial vehicles for use by the driver or passengers for resting, and which provides the user with a storage area or an empty space for the movement of the seats (K) in the linear seat movement axis (H) of the driver or passenger seat (K), **comprising:**
- at least one preferably flat and bed-like lying table (2) which is used by the driver or passenger for resting, sleeping and on which they can lie down, and which can be secured to the body (3) or cab rear wall preferably by way of a hinge or bracket or a bearer-like connection piece and which can be folded by being moved towards the cab rear wall, preferably in parallel to the cab rear wall, from the connection point thereof,
- at least one body (3) which is disposed under the lying table (2), preferably supports the lying table (2), and can be mounted on the cab floor, and
- at least one storage area (4) which is disposed at the lower section of the lying table (2), preferably inside the body (3) and which presents areas that can be used by the driver for storing his/her belongings, **and**
- **characterized by** at least one bed storage (5) which is disposed in the linear seat movement axis (H) of the driver or passenger seat (K) within the body (3) or storage area (4); the width of which is as large as that of at least one seat (K); which provides the user with an empty space in reverse movement of the seat (K); and which comprises an openable/closable sliding cover (6), a roller (10) which enrolls the sliding cover (6) by retracting the same in its direction, and a housing (8) in which the sliding cover (6) is stored.

2. A foldable bed for a cab of heavy commercial vehicles (1) as in claim 1, **characterized by** the bed storage (5) which presents for the user an empty space in the cab for moving the seat (K) by means of the sliding cover (6) which can be opened starting from the cab floor until the rear surface of the cab.

3. A foldable bed for a cab of heavy commercial vehicles (1) as in claim 1, **characterized by** the storage area (4) which is provided in the right or left or middle portion of the body (3) and which presents areas, in lower portion of the lying table (2) and preferably within the body (3), that can be used by the driver.

4. A foldable bed for a cab of heavy commercial vehicles (1) as in claim 2, **characterized by** the bed storage (5) which has a width, within the storage area (4), such that it will fill the storage area (4) and as large as at least one seat (K) or has a width as large as the sitting portion of the seat (K) and which provides the user, in a section of the body (3), with a compartment that can be used as an openable/closable storage area or empty space.

5. A foldable bed for a cab of heavy commercial vehicles (1) as in claim 1, **characterized by** the bed storage (5) which is positioned under the lying table (2), preferably such that it will support the lying table (2), and which can be directly mounted in the floor of the driver's cab or at the rear wall thereof.

6. A foldable bed for a cab of heavy commercial vehicles (1) as in claim 1, **characterized by** the bed storage (5) which **comprising:**
- at least one housing (8) which can be mounted in the cab, preferably in the cab chassis or on the foldable bed (1), and in which the sliding cover (6) is stored,
- at least one rail (9) which can be disposed between the housing (8) and cab floor or the bottom of the foldable bed (1); which defines the area in which the sliding cover (6) will move; and which enables, along the border in which it is located in a preferred area, the sliding cover (6) to be moved,
- a roller (10) which is preferably disposed in the housing (8); one end of which is connected to the sliding cover (6); and which applies a pulling force to the sliding cover (6) in the direction in which it is located, i.e. in the direction of the housing (8), and
- a sliding cover (6) which preferably moves inside the rail (9) and along the rail (9) and which, by closing some of or the whole rail (9), presents an area, in the section in which the rail (9) and the housing (8) are present, where various goods can be put.

7. A foldable bed for a cab of heavy commercial vehicles (1) as in claim 6, **characterized by** a grip (7) which is disposed on the sliding cover (6) and which enables the user to easily grab the sliding cover (6) and move it in the direction that s/he desires again easily.

8. A foldable bed for a cab of heavy commercial vehicles (1) as in claim 6, **characterized by** the housing (8) which allows the sliding cover (6) to be kept in a closed area, by maintaining the sliding cover (6) partly or fully therein, when said sliding cover (6) is not used.

9. A foldable bed for a cab of heavy commercial vehicles (1) as in claim 6, **characterized by** the roller (10) which allows the sliding cover (6) to be wound around itself and which ensures, when the sliding cover (6) is not in use, that it remains inside the housing (8) in a wound manner.

10. A foldable bed for a cab of heavy commercial vehicles (1) as in claim 9, **characterized by** the roller (10) which comprises, and can be used in a staged manner with, a lock and which enables the sliding cover (6) to be fixed between such stages in a way to present different open positions.

11. A foldable bed for a cab of heavy commercial vehicles (1) as in claim 6, **characterized by** the rail (9) which is configured to extend towards the cab floor starting from the housing (8); which has a linear or circular form; and in which a channel is provided.

12. A foldable bed for a cab of heavy commercial vehicles (1) as in claim 11, **characterized by** the rail (9) which comprises an upper part (91) and a lower part (92).

13. A foldable bed for a cab of heavy commercial vehicles (1) as in claim 12, **characterized by** the rail (9) which comprises an upper part (91) which, is configured to be in parallel to the driver's cab floor from the housing (8), preferably has the same width as or shorter than the lying table (2) and a lower part (92) which is perpendicular to the upper part (91) and extends from the upper part (91) until the floor and, lateral surfaces (11) which are arranged under the rail (9) and configured to extend until the floor.

14. A foldable bed for a cab of heavy commercial vehicles (1) as in claim 6, **characterized by** the louvered sliding cover (6) which, when closed, presents the closed area in which storage will be made and which is preferably made of plastic, fabric, wood, metal or an equivalent material and, the sliding cover (6) which is controlled by a motor and can be opened/closed by means of a motor.

## Patentansprüche

1. Ein Klappbett für ein Fahrerhaus von schweren Nutzfahrzeugen (1), welches dazu bestimmt ist, im Fahrerhaus schwerer Nutzfahrzeuge angeordnet zu werden, um vom Fahrer oder den Beifahrern zum Ausruhen benutzt zu werden, und welches dem Benutzer einen Stauraum oder einen Leerraum für die Bewegung der Sitze (K) in der linearen Sitzbewegungsachse (H) des Fahrer-oder Beifahrersitzes (K) zur Verfügung stellt, **umfassend:**
- Mindestens einen vorzugsweise flachen und bettartigen Liegetisch (2), der vom Fahrer oder Beifahrer zum Ausruhen, Schlafen benutzt wird und auf den jene sich legen kann, und der vorzugsweise über ein Scharnier oder einen Bügel oder ein trägerartiges Verbindungsstück an der Karosserie (3) oder der Fahrerhausrückwand befestigbar ist und durch Verschieben in Richtung der Fahrerhausrückwand, vorzugsweise parallel zur Fahrerhausrückwand von dessen Verbindungspunkt aus zusammenklappbar ist,
- mindestens eine Karosserie (3), die unter dem Liegetisch (2) angeordnet ist, vorzugsweise den Liegetisch (2) trägt und auf dem Fahrerhausboden montiert werden kann, und
- mindestens einen Stauraum (4), der im unteren Bereich des Liegetisches (2), vorzugsweise innerhalb der Karosserie (3), angeordnet ist und der dem Fahrer nutzbare Räume zum Ablegen seiner/ihrer Habseligkeiten bietet, **und**
- **gekennzeichnet durch** mindestens eine Bettenlagerung (5), die in der linearen Sitzbewegungsachse (H) des Fahrer- oder Beifahrersitzes (K) innerhalb der Karosserie (3) oder des Stauraums (4) angeordnet ist und dessen Breite so groß ist wie die des mindestens einen Sitzes (K); dem Benutzer bei der Rückwärtsbewegung des Sitzes (K) einen Leerraum zur Verfügung stellt; und einen öffenbaren/schließbaren Schiebedeckel (6), eine die den Schiebedeckel (6) durch Zurückziehen desselben in ihre Richtung einrollende Rolle (10), und ein Gehäuse (8), in dem der Schiebedeckel (6) aufgenommen wird, umfasst.

2. Klappbett für ein Fahrerhaus von schweren Nutzfahrzeugen (1) nach Anspruch 1, **gekennzeichnet durch** die Bettenlagerung (5), die dem Benutzer mittels des Schiebedeckels (6), der vom Fahrerhausboden bis zur Fahrerhausrückwand geöffnet werden kann, einen Leerraum im Fahrerhaus zum Verschieben des Sitzes (K) bietet.

3. Klappbett für ein Fahrerhaus von schweren Nutzfahrzeugen (1) nach Anspruch 1, **gekennzeichnet durch** den Stauraum (4), der im rechten oder linken oder mittleren Bereich der Karosserie (3) vorgesehen ist und im unteren Bereich des Liegetisches (2), und vorzugsweise innerhalb der Karosserie (3) nutzbare Räume zur Verfügung stellt, die vom Fahrer benutzt werden können.

4. Klappbett für ein Fahrerhaus von schweren Nutzfahrzeugen (1) nach Anspruch 2, **gekennzeichnet durch** die Bettenlagerung (5), die innerhalb des Stauraums (4) eine derart große Breite aufweist, dass sie den Stauraum (4) ausfüllt, und so groß ist wie mindestens ein Sitz (K) oder eine Breite aufweist, die so groß ist wie der Sitzteil des Sitzes (K), und die dem Benutzer in einem Abschnitt der Karosserie (3) ein Fach zur Verfügung stellt, das als öffenbarer/schließbarer Stauraum oder Leerraum verwendet werden kann.

5. Klappbett für ein Fahrerhaus von schweren Nutzfahrzeugen (1) nach Anspruch 1, **gekennzeichnet durch** die Bettenlagerung (5), die unter dem Liegetisch (2) vorzugsweise derart angeordnet ist, dass diese den Liegetisch (2) abstützt und direkt im Boden des Fahrerhauses oder an dessen Rückwand montierbar ist.

6. Klappbett für ein Fahrerhaus von schweren Nutzfahrzeugen (1) nach Anspruch 1, **gekennzeichnet durch** die Bettenlagerung (5), **umfassend:**
- mindestens ein Gehäuse (8), das im Fahrerhaus, vorzugsweise im Fahrerhausrahmen oder an dem Klappbett (1) montiert werden kann und in dem der Schiebedeckel (6) untergebracht ist,
- mindestens eine Schiene (9), die zwischen dem Gehäuse (8) und dem Fahrerhausboden oder dem Boden des Klappbettes (1) angeordnet werden kann; den Bereich definiert, in dem sich der Schiebedeckel (6) bewegt, und es ermöglicht, den Schiebedeckel (6) entlang der Grenzlinie, innerhalb derer er sich in einem bevorzugten Bereich befindet, zu bewegen,
- eine Rolle (10), die vorzugsweise im Gehäuse (8) angeordnet und deren eines Ende mit dem Schiebedeckel (6) verbunden ist, und die auf den Schiebedeckel (6) eine Zugkraft in der Richtung, in der er sich befindet, d.h. in Richtung des Gehäuses (8), ausübt, und
- einen Schiebedeckel (6), der sich vorzugsweise im Inneren der Schiene (9) und entlang der Schiene (9) bewegt und durch Verschließen eines Teils oder der gesamten Schiene (9) in dem Abschnitt, in dem sich die Schiene (9) und das Gehäuse (8) befinden, einen Raum darstellt, in dem verschiedene Güter abgelegt werden können.

7. Klappbett für ein Fahrerhaus von schweren Nutzfahrzeugen (1) nach Anspruch 6, **gekennzeichnet durch** einen Griff (7), der an dem Schiebedeckel (6) angeordnet ist und es dem Benutzer ermöglicht, den Schiebedeckel (6) leicht zu ergreifen und wieder leicht in die von ihm gewünschte Richtung zu bewegen.

8. Klappbett für ein Fahrerhaus von schweren Nutzfahrzeugen (1) nach Anspruch 6, **gekennzeichnet durch** das Gehäuse (8), das es ermöglicht, den Schiebedeckel (6) in einem geschlossenen Bereich zu halten, in dem der Schiebedeckel (6) teilweise oder vollständig darin gehalten wird, solange der Schiebedeckel (6) nicht benutzt wird.

9. Klappbett für ein Fahrerhaus von schweren Nutzfahrzeugen (1) nach Anspruch 6, **gekennzeichnet durch** die Rolle (10), die es ermöglicht, den Schiebedeckel (6) um sich selbst zu wickeln und die dafür sorgt, dass der Schiebedeckel (6) in gewickeltem Zustand im Gehäuse (8) verbleibt, solange er nicht benutzt wird.

10. Klappbett für ein Fahrerhaus von schweren Nutzfahrzeugen (1) nach Anspruch 9, **gekennzeichnet durch** die Rolle (10), die eine stufenweise verwendbare Verriegelung aufweist, welche es ermöglicht, den Schiebedeckel (6) zwischen diesen Stufen derart zu fixieren, dass dadurch verschiedene Öffnungspositionen dargestellt werden können.

11. Klappbett für ein Fahrerhaus von schweren Nutzfahrzeugen (1) nach Anspruch 6, **gekennzeichnet durch** die Schiene (9), die derart ausgebildet ist, dass sie sich ausgehend vom Gehäuse (8) zum Fahrerhausboden hin erstreckt, eine geradlinige oder kreisförmige Form aufweist und in der eine Rinnevorgesehen ist.

12. Klappbett für ein Fahrerhaus von schweren Nutzfahrzeugen (1) nach Anspruch 11, **gekennzeichnet durch** die Schiene (9), die ein Oberteil (91) und ein Unterteil (92) aufweist.

13. Klappbett für ein Fahrerhaus von schweren Nutzfahrzeugen (1) nach Anspruch 12, **gekennzeichnet durch** die Schiene (9), die einen Oberteil (91), der vom Gehäuse (8) aus parallel zum Fahrerhausboden verlaufend ausgebildet ist, vorzugsweise gleich breit wie oder kürzer als der Liegetisch (2) ist, und einen Unterteil (92) aufweist, der senkrecht zum Oberteil (91) steht und sich vom Oberteil (91) bis zum Boden erstreckt, und Seitenflächen (11), die unter der Schiene (9) angeordnet und bis zum Boden verlaufend ausgebildet sind.

14. Klappbett für ein Fahrerhaus von schweren Nutzfahrzeugen (1) nach Anspruch 6, **gekennzeichnet durch** den Schiebedeckel (6) mit Luftschlitzen, der in geschlossenem Zustand den geschlossenen Raum darstellt, in dem die Lagerung erfolgt, und der vorzugsweise aus Kunststoff, Gewebe, Holz, Metall oder einem gleichwertigen Material besteht, sowie den motorisch gesteuerten Schiebedeckel (6), der motorisch geöffnet/geschlossen werden kann.

## Revendications

1. Un lit pliable pour la cabine de véhicules utilitaires lourds (1) destiné à être installé dans la cabine de véhicules utilitaires lourds pour être utilisé par le conducteur ou les passagers afin de se reposer, et qui offre à l'utilisateur une zone de rangement ou un espace vide pour le déplacement des sièges (K) dans l'axe linéaire (H) de déplacement des sièges du siège (K) du conducteur ou du passager, **comprenant** :
- au moins une table de repos (2), de préférence plate et de forme similaire à un lit, qui est utilisée par le conducteur ou le passager pour se reposer, dormir et sur laquelle ils peuvent s'allonger, et qui peut être fixée au corps (3) ou à la paroi arrière de la cabine de préférence au moyen d'une charnière ou d'une équerre de fixation ou d'une pièce de connexion semblable à un support, et qui peut être pliée en étant déplacée vers la paroi arrière de la cabine, de préférence parallèlement à la paroi arrière de la cabine, à partir de son point de connexion,
- au moins un corps (3) qui est installé sous la table de repos (2), soutient de préférence la table de repos (2) et peut être monté sur le plancher de la cabine, et
- au moins une zone de rangement (4) qui est installée dans la section inférieure de la table de repos (2), de préférence à l'intérieur du corps (3) et qui présente des zones pouvant être utilisées par le conducteur pour stocker ses affaires, **et**
- **caractérisé par** au moins un rangement pour lit (5) qui est installé dans l'axe linéaire (H) de déplacement des sièges du siège (K) du conducteur ou du passager à l'intérieur du corps (3) ou de la zone de rangement (4), dont la largeur est aussi grande que celle d'au moins un siège (K); qui offre à l'utilisateur un espace vide lors du déplacement inverse du siège (K); et qui comprend un couvercle coulissant (6) ouvrable/fermable, un rouleau (10) qui enroule le couvercle coulissant (6) en le rétractant dans sa direction, et une chambre (8) dans laquelle le couvercle coulissant (6) est stocké.

2. Un lit pliable pour une cabine de véhicules utilitaires lourds (1) selon la revendication 1, **caractérisé par** le rangement pour lit (5) qui offre à l'utilisateur un espace vide dans la cabine pour déplacer le siège (K) au moyen du couvercle coulissant (6) qui peut être ouvert à partir du plancher de la cabine jusqu'à la surface arrière de la cabine.

3. Un lit pliable pour une cabine de véhicules utilitaires lourds (1) selon la revendication 1, **caractérisé par** la zone de rangement (4) qui est situé dans la portion droite, gauche ou centrale du corps (3) et qui présente des zones dans la portion inférieure de la table de repos (2) et de préférence à l'intérieur du corps (3), pouvant être utilisées par le conducteur.

4. Un lit pliable pour une cabine de véhicules utilitaires lourds (1) selon la revendication 2, **caractérisé par** le rangement pour lit (5) qui a une largeur, à l'intérieur de la zone de rangement (4), de manière à remplir la zone de rangement (4) et aussi large qu'au moins un siège (K) ou a une largeur aussi grande que la portion assise du siège (K) et qui offre à l'utilisateur, dans une section du corps (3), un compartiment pouvant être utilisé comme une zone de rangement ou un espace vide ouvrable/fermable.

5. Un lit pliable pour une cabine de véhicules utilitaires lourds (1) selon la revendication 1, **caractérisé par** le rangement pour lit (5) qui est positionné sous la table de repos (2), de préférence de manière à soutenir la table de repos (2), et qui peut être directement monté dans le plancher de la cabine du conducteur ou à sa paroi arrière.

6. Un lit pliable pour une cabine de véhicules utilitaires lourds (1) selon la revendication 1, **caractérisé par** le rangement pour lit (5) **comprenant** :
- au moins une chambre (8) qui peut être montée dans la cabine, de préférence dans le châssis de la cabine ou sur le lit pliable (1), et dans laquelle le couvercle coulissant (6) est stocké,
- au moins un rail (9) qui peut être installé entre la chambre (8) et le plancher de la cabine ou le bas du lit pliable (1); qui définit la zone dans laquelle le couvercle coulissant (6) se déplacera ; et qui permet, le long de la bordure dans laquelle il est situé dans une zone préférée, de déplacer le couvercle coulissant (6),
- un rouleau (10) qui est de préférence installé dans la chambre (8); dont une extrémité est reliée au couvercle coulissant (6); et qui applique une force de traction sur le couvercle coulissant (6) dans la direction dans laquelle il se trouve, c'est-à-dire dans la direction de la chambre (8), et
- un couvercle coulissant (6) qui se déplace de préférence à l'intérieur du rail (9) et le long du rail (9) et qui, en fermant une partie ou la totalité du rail (9), présente une zone, dans la section où le rail (9) et la chambre (8) sont présents, où divers biens peuvent être placés.

7. Un lit pliable pour une cabine de véhicules utilitaires lourds (1) selon la revendication 6, **caractérisé par** une poignée (7) qui est installée sur le couvercle coulissant (6) et qui permet à l'utilisateur de saisir facilement le couvercle coulissant (6) et de le déplacer dans la direction qu'il/elle souhaite, de nouveau facilement.

8. Un lit pliable pour une cabine de véhicules utilitaires lourds (1) selon la revendication 6, **caractérisé par** la chambre (8) qui permet de maintenir le couvercle coulissant (6) dans une zone fermée, en maintenant le couvercle coulissant (6) partiellement ou entièrement à l'intérieur, lorsque ledit couvercle coulissant (6) n'est pas utilisé.

9. Un lit pliable pour une cabine de véhicules utilitaires lourds (1) selon la revendication 6, **caractérisé par** le rouleau (10) qui permet au couvercle coulissant (6) de s'enrouler sur lui-même et qui assure, lorsque le couvercle coulissant (6) n'est pas utilisé, qu'il reste à l'intérieur de la chambre (8) de manière enroulée.

10. Un lit pliable pour une cabine de véhicules utilitaires lourds (1) selon la revendication 9, **caractérisé par** le rouleau (10) qui comprend, et peut être utilisé de manière échelonnée avec, un verrou et qui permet au couvercle coulissant (6) d'être fixé entre de telles étapes de manière à présenter différentes positions ouvertes.

11. Un lit pliable pour une cabine de véhicules utilitaires lourds (1) selon la revendication 6, **caractérisé par** le rail (9) qui est configuré pour s'étendre vers le plancher de la cabine à partir de la chambre (8) ; qui présente une forme linéaire ou circulaire ; et dans lequel un canal est prévu.

12. Un lit pliable pour une cabine de véhicules utilitaires lourds (1) selon la revendication 11, **caractérisé par** le rail (9) qui comprend une partie supérieure (91) et une partie inférieure (92).

13. Un lit pliable pour une cabine de véhicules utilitaires lourds (1) selon la revendication 12, **caractérisé par** le rail (9) qui comprend une partie supérieure (91) qui est configurée pour être parallèle au plancher de la cabine du conducteur à partir de la chambre (8), ayant de préférence la même largeur que la table de repos (2) ou plus courte, et une partie inférieure (92) qui est perpendiculaire à la partie supérieure (91) et s'étend de la partie supérieure (91) jusqu'au plancher, ainsi que des surfaces latérales (11) qui sont disposées sous le rail (9) et configurées pour s'étendre jusqu'au plancher.

14. Un lit pliable pour une cabine de véhicules utilitaires lourds (1) selon la revendication 6, **caractérisé par** le couvercle coulissant (6) à persiennes qui, lorsque fermé, présente la zone fermée dans laquelle le rangement sera effectué et qui est de préférence fabriqué en plastique, tissu, bois, métal ou un matériau équivalent, et le couvercle coulissant (6) qui est commandé par un moteur et peut être ouvert/fermé à l'aide d'un moteur.
